# EUROPÄISCHE PATENTSCHRIFT

(11) **EP 3 136 525 B1**
(45) Veröffentlichungstag und Bekanntmachung des Hinweises auf die Patenterteilung: **03.04.2024**
(21) Anmeldenummer: 15182882.9
(22) Anmeldetag: 28.08.2015
(51) Int. Cl.: H02G 9/04, H02G 3/04, H02G 3/06

(54) **KABELKANAL UND VERFAHREN ZUR HERSTELLUNG EINES BEGEHBAREN KABELKANALDECKELS**
CABLE CONDUIT, AND METHOD FOR PRODUCING A CABLE CONDUIT COVER WHICH CAN BE WALKED ON
CANIVEAU DE CABLE ET PROCEDE DE FABRICATION D'UN COUVERCLE DE CANIVEAU DE CABLES SUR LEQUEL ON PEUT MARCHER

(43) Veröffentlichungstag der Anmeldung: 01.03.2017
(60) Teilanmeldung: 18194217.8
(73) Patentinhaber: Niedax GmbH & Co. KG, 53545 Linz/Rhein (DE)
(72) Erfinder: KLOFT, Martin, 53545 Linz/Rhein (DE); EWENZ, Thomas, 53545 Linz/Rhein (DE); TIPMANN, Andreas, 53545 Linz/Rhein (DE)
(74) Vertreter: Vossius & Partner Patentanwälte Rechtsanwälte mbB

(56) Entgegenhaltungen:
- EP-A1- 1 345 302
- EP-A2- 2 381 550
- WO-A1-2010/034298
- DE-A1-102005 018 812
- DE-A1-102014 114 153
- GB-A- 1 392 957
- GB-A- 2 232 179

## Beschreibung

Die Vorliegende Erfindung betrifft einen Kabelkanal mit einem begehbaren Kabelkanaldeckel und ein Verfahren zur Herstellung eines begehbaren Kabelkanaldeckels.

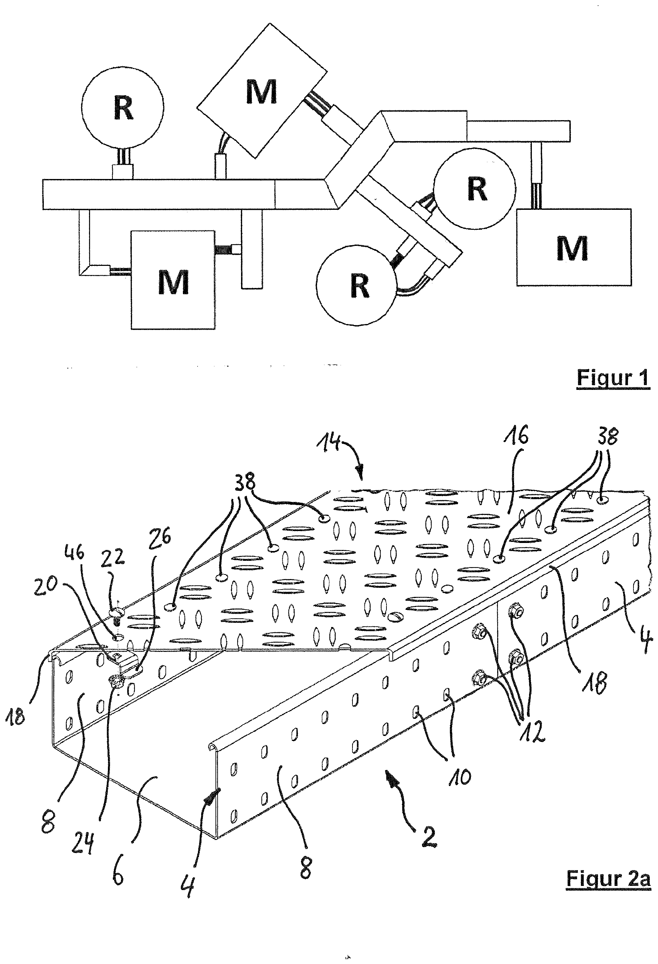

Begehbare Kabelrinnen- oder Kabelkanalsysteme werden beispielsweise eingesetzt, um Versorgungsleitungen einzelner Komponenten von Industrieanlagen zu verketten, insbesondere elektrische Leitungen an Maschinen oder Roboter heranzuführen, wie dies schematisch in Figur 1 dargestellt ist. Hierzu kommen Kabelkanalsysteme unterschiedlicher Größen zum Einsatz, die üblicherweise vor Ort installiert werden. Um die Kabelkanäle an die erforderlichen Stellen zu führen, ist es häufig erforderlich, die Kabelkanlsysteme zuzuschneiden und Abzweigungen vorzusehen, wie dies in Figur 1 schematisch gezeigt ist.

Eine häufig gestellte Anforderung an Kabelkanalsysteme ist, dass diese von Personen begehbar sein müssen. Aus Sicherheitsgründen ist es daher notwendig, die Kabelkanalsysteme derart auszubilden, dass sie eine ausreichende Rutschfestigkeit aufweisen, so dass eine Person, die auf den Kabelkanal tritt, nicht ausrutscht. Hierzu wird üblicherweise ein Deckel mit einer Riffelung an seiner Oberseite verwendet, der auf die Kabelkanalrinne aufgesetzt wird. Zur Montage des Deckels an der Kabelkanalrinne gibt es verschiedene Lösungen, wie zum Beispiel Rastsysteme, bei denen der Deckel direkt auf die Kabelkanalrinne aufrastet, oder es werden Federelemente beziehungsweise Klammern eingesetzt, mit denen der Deckel an einer Kabelkanalrinne befestigt wird. Außerdem ist auch die Verwendung von am Deckel angebrachten Drehriegeln bekannt, mit denen der Deckel an der Kabelkanalrinne arretiert wird.

Im Stand der Technik ist zum Beispiel ein begehbarer Deckel für Kabelkanalsysteme bekannt, der aus einem gebogenem Stahlblech gebildet wird, auf dessen Oberseite ein Aluminium-Riffelblech aufgenietet ist. Zur Befestigung dieses Deckels werden üblicherweise Drehriegel verwendet. Zur Montage der Drehriegel am Kanaldeckel ist es jedoch erforderlich Befestigungsbohrungen im Deckel vorzusehen. Dazu wird ein spezieller Stufenbohrer verwendet, mit dem ein Durchgangsloch durch das Aluminium-Riffelblech und den Stahldeckel gebohrt wird, wobei durch die Abstufung des Bohrers das Alu-Riffelblech in Montagebereich abgetragen wird. Ein derartiges begehbares Kabelrinnensystem ist beispielsweise im Katalog für begehbare Kabelrinnen-Systeme der Firma Niedax GmbH & Co. KG gezeigt.

Ferner sind U-förmige strukturierte Metalldeckel, insbesondere Riffelblechdeckel aus Aluminium und Stahl bekannt. Diese sind über ihre gesamte Außenseite, d.h. an den seitlichen Schenkeln und der Oberseite, mit einer Riffelung versehen.

Die EP 1 345 302 A1 offenbart eine Kabelkanalrinne und eine Kabelkanaldeckel, die so ausgelegt sind, dass sie ohne weitere Befestigungsmittel miteinander verbunden werden können. Hierzu weisen sowohl die Seitenwände der Kabelkanalrinne also auch die Seitenteile des Kabelkanaldeckels bestimmte Winkelgeometrien auf, um einen Schnappmechanismus bereitzustellen, mit dem der Kabelkanaldeckel an der Kabelkanalrinne angebracht werden kann.

Die WO 2010/034298 A1 betrifft ein kaltgewalztes Blech, das zur Erhöhung der Rutschfestigkeit mit Mustern, die als tränenförmige Muster ausgestaltet sein können, versehen ist, sowie einen Rand 3 mit einem Biegebereich 4 aufweist, in den keine Muster eingebracht sind.

Die GB 1 392 957 A, GB 2 232 179 A und EP 2 381 550 A2 betreffen weitere bekannte Abdeckbleche mit im Wesentlichen vollständig strukturierter Oberfläche. Dabei offenbart EP 2 381 550 A2 einen Kabelkanal mit Kabelkanalrinne und Kabelkanaldeckel, wobei der Kabelkanaldeckel eine rutschhemmend strukturierte Oberseite ausweist.

Der vorliegenden Erfindung liegt die Aufgabe zu Grunde, einen verbesserten Kabelkanaldeckel, ein damit ausgestattetes Kabelkanalsystem sowie ein diesbezügliches Herstellungsverfahren bereitzustellen, wobei insbesondere eine einfachere Montage, eine kostengünstigere Herstellung und eine bessere Recyclingfähigkeit erzielt werden sollen. Diese Aufgabe wird mit den Merkmalen der unabhängigen Ansprüche gelöst. Bevorzugte Ausführungsformen der Erfindung sind in den abhängigen Ansprüchen beschrieben.

Die Erfindung betrifft dementsprechend einen Kabelkanal entsprechend Anspruch 1 mit einer Kabelkanalrinne, einem begehbaren Kabelkanaldeckel und mindestens einem Befestigungsmittel zur Befestigung des Kabelkanaldeckels an der Kabelkanalrinne. Der begehbare Kabelkanaldeckel weist ein Abdeckteil und zwei vom Abdeckteil abstehende Seitenteile, die jeweils einen Seitenrand des Deckels bilden und durch Umbiegen beider Längsränder von der Oberseite weg nach unten abstehend gebildet sind. Das Abdeckteil verfügt über eine Oberseite und eine Unterseite und erstreckt sich zwischen den beiden Seitenteilen. Vorzugsweise definiert das Abdeckteil und die abstehenden Seitenteile eine im Wesentlichen umgekehrt U-förmige Querschnittsform. Die beiden Seitenteile des Kabelkanaldeckels sind dabei derart ausgebildet, dass sie mit Seitenwänden einer Kabelkanalrinne zusammengeführt werden können, um den Kabelkanaldeckel an der Kabelkanalrinne in einer definierten Position anzubringen.

Die Oberseite des Abdeckteils weist einen strukturierten Mittelbereich auf, der durch Stanzen bzw. Prägen von der Unterseite gebildet ist und eine rutschhemmende Oberfläche bereitstellt. Auf der Oberseite des Abdeckteils ist beidseitig des strukturierten Mittelbereichs zum jeweiligen Seitenrand hin ein strukturfreier Randbereich vorgesehen, der eine Breite von 5 mm bis 50 mm, bevorzugt 10 mm bis 40 mm aufweist.

Der strukturierte Mittelbereich kann jegliche Form der Strukturierung aufweisen, die eine ausreichend rutschhemmende Oberfläche bereitstellt. Eine ausreichende Rutschhemmung im Sinne der vorwiegenden Erfindung liegt vor, wenn mindestens die Klasse R10 nach DIN 51130:2014-02 erreicht wird. Vorzugsweise ist der strukturierte Mittelbereich in Form eines sich wiederholenden Musters, zum Beispiel in Form einer Riffelung, ausgebildet.

In einer bevorzugten Ausführungsform des erfindungsgemäßen Kabelkanaldeckels sind im Abdeckteil eingestanzte Befestigungsstellen zur Montage von Befestigungsmitteln vorgesehen. Die eingestanzten Befestigungsstellen sind vorzugsweise in einem sich wiederholenden Muster in einem Abstand von mindestens 5 mm, vorzugsweise 5 mm bis 70 mm und stärker bevorzugt 10 mm bis 50 mm, vom Seitenrand angeordnet. Der Abstand in Längsrichtung des Kabelkanaldeckels liegt vorzugsweise bei mindestens 25 mm, bevorzugt zwischen 40 mm und 100 mm, stärker bevorzugt zwischen 50 mm und 75 mm. Dadurch ergeben sich auf vorteilhafte Weise ausreichend Befestigungsstellen zur Montage des erfindungsgemäßen Kabelkanaldeckels, unabhängig davon, auf welche Länge der Deckel bei der Installation zugeschnitten wird.

Die Befestigungsstellen sind beispielsweise so angeordnet, dass sie in Zwischenbereichen der eingestanzten Strukturierung des Mittelbereichs liegen. Vorzugsweise sind die Befestigungsstellen derart eingestanzt, dass sie jeweils in ihrem Randbereiche mindestens eine Sollbruchstelle definieren, so dass ein eingestanzter Teil ("Butzen") vom Abdeckteil durch Aufbrechen der Sollbruchstelle, beispielsweise durch Ausschlagen von der Unter- oder Oberseite des Abdeckteils, geöffnet werden kann. Dadurch kann der erfindungsgemäße Kabelkanaldeckel bei der Installation an jeder gewünschten Stelle mit einem Befestigungsmittel (z. B. Drehriegel oder Schraube) versehen werden, ohne dass eine Bohrung vorgesehen werden muss. Dadurch entfällt die Verwendung einer bisher erforderlichen Bohrmaschine samt Spezialwerkzeug, es werden keine Späne erzeugt und die Montage ist deutlich zügiger mit besserem Montageergebnis durchzuführen. Das Ausbrechen der Befestigungsstellen kann beispielsweise mit einem leichten Körnerschlag bewerkstelligt werden, wobei lediglich der Butzen als Abfall anfällt und entfernt werden muss. Dabei ist es ferner von Vorteil, dass die Befestigungsstellen verschlossen bleiben und somit der Kabelkanaldeckel keinerlei Öffnungen für das Eindringen von Schmutz und Flüssigkeiten bilden.

Der Kabelkanaldeckel der vorliegenden Erfindung ist vorzugsweise aus Metall, insbesondere einem Aluminium- oder Stahlblech, gebildet. Eine Sandwich-Struktur wie im Stand der Technik ist nicht erforderlich. Vielmehr ist der erfindungsgemäße Kanaldeckel einlagig ausgebildet.

Da der Seitenrand des erfindungsgemäßen Kabelkanals sowie vorzugsweise die Seitenteile strukturfrei sind, ist eine einfache Umformung des Seitenrands bei der Herstellung gewährleistet. Darüber hinaus wird dadurch ermöglicht, dass zur Befestigung des erfindungsgemäßen Kabelkanaldeckels auch Deckelhaltefedern an den Seitenteilen angebracht werden können, da dort keine Strukturierung vorhanden ist.

Vorzugsweise weist das Befestigungsmittel, mindestens einer Deckelhaltefeder und/oder mindestens einem Drehriegel zur Befestigung des Kabelkanaldeckes an der Kabelkanalrinne auf.

Vorzugsweise hat die Kabelkanalrinne einen Boden und Seitenwände. In den Seitenwänden sind bevorzugt eingestanzte Befestigungsstellen vorgesehen, die derart ausgebildet sind, dass jeweils in ihrem Randbereich mindestens eine Sollbruchstelle definiert ist, so dass ein eingestanzter Teil ("Butzen") der Seitenwand durch Aufbrechen der Sollbruchstelle geöffnet werden kann. Dies kann insbesondere durch Ausschlagen von innen oder außen erfolgen.

Des Weiteren betrifft die Erfindung ein Verfahren entsprechend Anspruch 13 zur Herstellung eines begehbaren Kabelkanaldeckels. Dazu wird zunächst ein Blechband mit einer Oberseite und einer Unterseite von einer Rolle oder einem Coil bereitgestellt. Das Blechband wird dann beispielsweise einer Umformstation zugeführt, in der ein strukturierter Mittelbereich im Blechband von der Unterseite eingestanzt oder eingeprägt wird, um auf der Oberseite eine rutschhemmende Oberfläche auszubilden. Des Weiteren werden die beiden Längsränder des Blechbandes kontinuierlich umgebogen bzw. abgekantet, um zwei Seitenteile und einen dazwischen liegenden Abdeckteil des Kabelkanaldeckels auszubilden. Das Abkanten erfolgt vor dem Ausbilden des strukturierten Mittelbereichs. Die Oberseite des Abdeckteils bleibt beidseitig des strukturierten Mittelbereichs bis zu einem durch die jeweiligen Seitenteile gebildeten Seitenrand ohne Strukturierung und bildet einen strukturfreien Randbereich mit einer Breite von 5 mm bis 50 mm, bevorzugt 10 mm bis 40 mm.

Das erfindungsgemäße Verfahren kann ferner einen Schritt des Einstanzens von Befestigungsstellen im Mittelbereich zur Montage von Befestigungsmitteln aufweisen. Die Befestigungsstellen werden vorzugsweise so eingestanzt, dass jeweils im Randbereich der Befestigungsstellen mindestens eine Sollbruchstelle gebildet ist, so dass ein eingestanzter Teil ("Butzen") vom Abdeckteil durch Aufbrechen der Sollbruchstelle geöffnet werden kann. Dies kann insbesondere durch Ausschlagen von der Unter- oder Oberseite des Abdeckteils erfolgen.

Die Befestigungsstellen wiederholen sich vorzugsweise in einem Muster und haben einen Abstand von mindestens 5 mm, bevorzugt 5 mm bis 70 mm und stärker bevorzugt 10 mm bis 50 mm, vom Seitenrand. Der Abstand benachbarter Befestigungsstellen zueinander in Längsrichtung beträgt vorzugsweise mindestens 25 mm, bevorzugt 40 mm bis 100 mm, stärker bevorzugt 50 mm bis 75 mm.

Das erfindungsgemäße Verfahren ist insbesondere von Vorteil, da es als kontinuierliches Herstellungsverfahren einen effektiven Herstellungsprozess ermöglicht. Die Kabelkanaldeckel können in beliebigen Längen bereitgestellt werden.

Nachfolgend werden bevorzugte Ausführungsformen der Erfindung anhand der Zeichnungen beispielhaft beschrieben. Es zeigen:
- Figur 1: eine schematische Darstellung eines Installationsbeispiels für Kabelkanlsysteme;
- Figur 2a: eine räumliche Darstellung eines erfindungsgemäßen Kabelkanalsystems, bei dem der Kabelkanaldeckel durch Drehriegel befestigt wird;
- Figur 2b: eine räumliche Darstellung eines erfindungsgemäßen Kabelkanalsystems, bei dem der Kabelkanaldeckel mittels einer Deckelhaltefeder befestigt wird;
- Figur 2c: Eine räumliche Darstellung eines Kabelkanalsystems, bei dem der Kabelkanaldeckel mit einem Drehriegel und einer Deckelhaltefeder befestigt wird;
- Figur 3: eine vergrößerte Darstellung einer Ausführungsform eines erfindungsgemäßen Kabelkanaldeckels;
- Figur 4: eine räumliche Darstellung des in Figur 3 gezeigten Kabelkanaldeckels mit einem Drehriegel;
- Figur 5: eine räumliche Darstellung einer Kabelkanalrinne zur Verwendung mit einem erfindungsgemäßen Kabelkanalsystem;
- Figur 6: einen Querschnitt durch die Rinne gemäß Figur 5; und
- Figur 7: eine räumliche Darstellung der Verbindung mehrerer Kabelkanalrinnen gemäß Figur 5 miteinander.

In Figur 1 ist eine schematische Darstellung der Verwendung von begehbaren Kabelkanalsystemen dargestellt. Wie gezeigt verläuft ein Hauptkanal zwischen verschiedenen Maschinen M und Robotern R, wobei Abzweigungen zu den jeweiligen Maschinen M und Robotern R führen. Es ist ebenfalls erkennbar, dass Kabelkanlsysteme mit unterschiedlichen Breiten Anwendung finden.

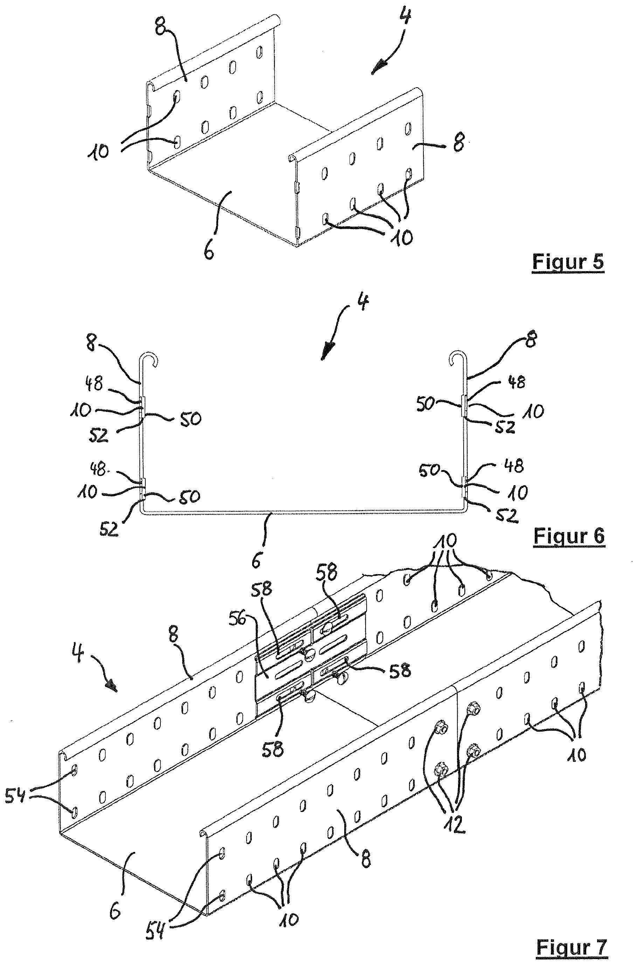

In Figuren 2a bis 2c sind erfindungsgemäße Kabelkanalsysteme bzw. Kabelkanäle 2 in räumlicher Darstellung gezeigt. Der Kabelkanal 2 weißt eine Kabelkanalrinne 4 mit einem Boden 6 und Seitenwänden 8 auf. Die Seitenwände 8 sind üblicherweise durch Umformen, insbesondere endloses Profilieren (Rollbiegen) oder Abkanten eines ursprünglich ebenen Blechbandes ausgebildet. An den oberen Enden der Seitenwände 8 sind diese vorzugsweise nach innen umgefalzt. An den Seitenwänden 8 sind ferner Befestigungsstellen 10 vorgesehen, die beispielsweise als Öffnungen ausgebildet sein können, um einzelne Kabelrinnenelemente 4 miteinander zu verbinden. Hierzu kann beispielsweise im Bereich des Übergangs von einer Kabelkanalrinne 4 zur nächsten ein Verbinder vorgesehen sein, der mittels Schrauben 12 die beiden Kabelkanalrinnen 4 miteinander verbindet. Dies wird in Zusammenhang mit Figur 6 nachfolgend ausführlicher beschrieben.

Der erfindungsgemäße Kabelkanal 2 verfügt ferner über einen erfindungsgemäßen Kabelkanaldeckel 14, der auf der Kabelkanalrinne 4 anbringbar ist. Der Kabelkanaldeckel 14 hat ein sich im Wesentlichen über die Breite der Kabelkanalrinne 4 erstreckendes Abdeckteil 16 und zwei vom Abdeckteil 16 abstehende Seitenteile 18. In der Ausführungsform gemäß Figur 2a ist der erfindungsgemäße begehbare Kabelkanaldeckel 14 in einem auf die Kabelkanalrinne 4 aufgesetzten Zustand dargestellt. Zur Fixierung des Kabelkanaldeckels 14 an der Kabelkanalrinne 4 sind in dieser Ausführungsform Drehriegel 20 vorgesehen, die mittels einer Schraube 22 und Mutter 24 angeschraubt sind. Zum Verriegeln des Kabelkanaldeckels 14 an der Kabelkanalrinne 4 wird der Drehriegel mit Hilfe der Schraube 22 derart gedreht, dass ein ausklagender Vorsprung 26 unter den nach innen gebogenen Rand einer Seitenwand 8 der Kabelkanalrinne greift.

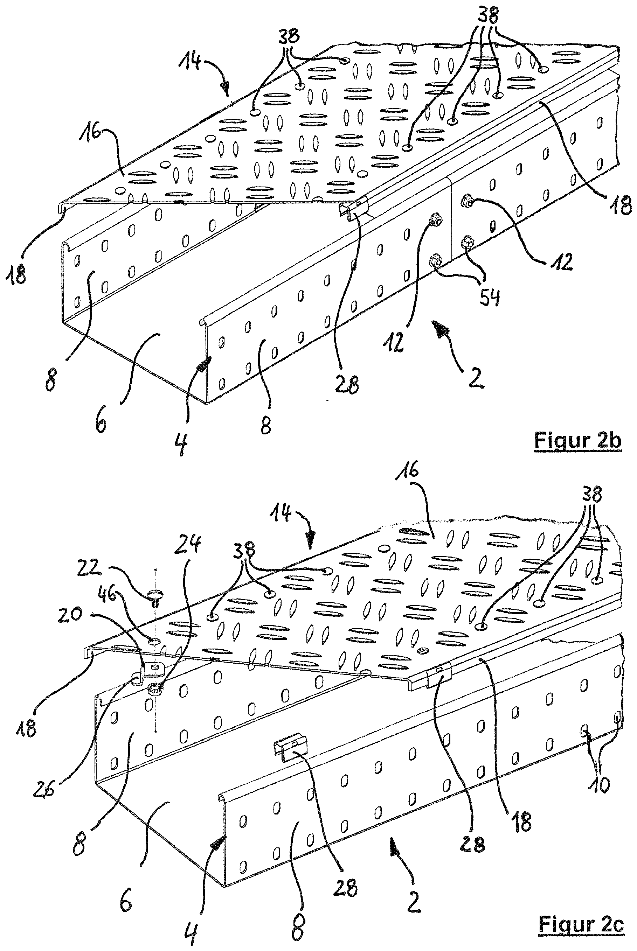

In Figur 2b gezeigte Ausführungsform unterscheidet sich im Wesentlichen von der vorstehend beschriebenen Ausführungsform nach Figur 2a dadurch, dass zur Befestigung des Kabelkanaldeckels 14 Haltefedern 28 zum Einsatz kommen, die einerseits über die nach unten vorstehenden Seitenteile 18 des Kabelkanaldeckels 14 aufgesteckt werden und andererseits über den nach innen gebogenen Rand der Seitenwände 8 der Kabelkanalrinne 4 zur Verriegelung des Kabelkanaldeckels 14 eingerastet werden.

In der in Figur 2c dargestellten Ausführungsform ist gezeigt, dass der erfindungsgemäße Kabelkanaldeckel 14 sowohl mit Drehriegeln 20 als auch mit Haltefedern 28 an der Kabelkanalrinne 4 befestigt werden kann.

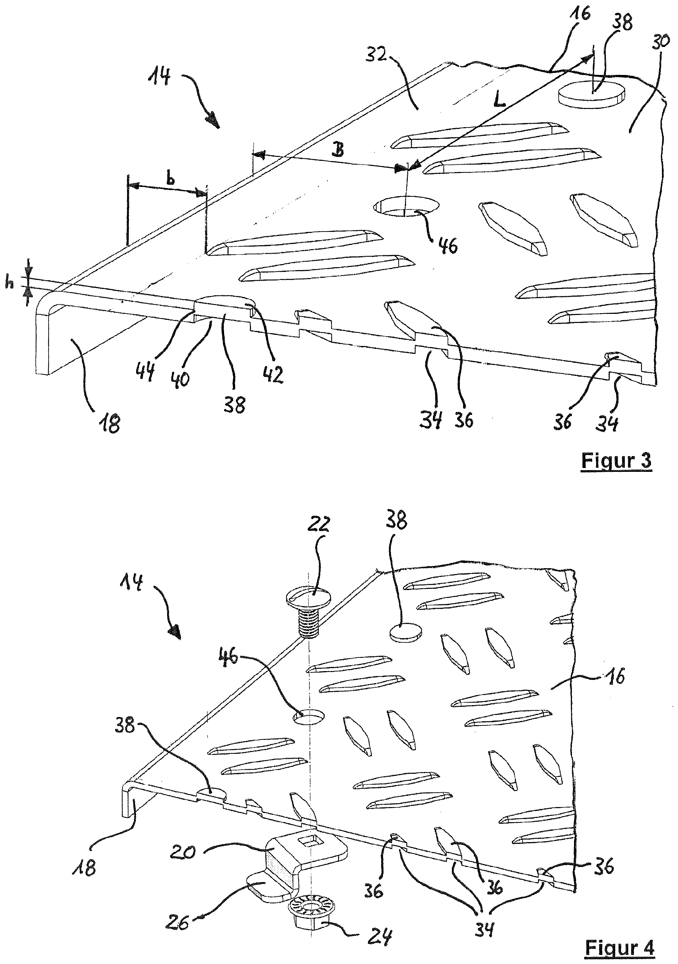

Eine Ausführungsform des erfindungsgemäßen Kabelkanaldeckels 14 wird nachfolgend unter Bezugnahme auf die Figuren 3 und 4 näher beschrieben. Der Deckel 14 verfügt, wie bereits vorstehend beschrieben, über ein Abdeckteil 16, das im Wesentlichen die obere Öffnung der Kabelkanalrinne 4 abdeckt, und zwei sich davon nach unten ersteckende Seitenteile 18, die jeweils seitlich mit den Seitenwänden 8 der Kabelkanalrinne 4 zusammengeführt werden können, um den Deckel 14 auf der Kabelkanalrinne 4 seitlich zu fixieren.

Der Deckel 14 wird vorzugsweise in einem kontinuierlichen Herstellverfahren produziert. Dabei wird zunächst ein Blechband mit einer Breite bereitgestellt, die der Gesamtbreite des Abdeckteils 16 zuzüglich der Höhe der beiden Seitenteile 18 entspricht. Das Blechband wird üblicherweise in Form einer Rolle bzw. eines Coils bereitgestellt. Die beiden Seitenteile 18, die jeweils einen Seitenrand des Kabelkanaldeckels 14 bilden, werden vorzugsweise durch Umbiegen bzw. Abkanten in einem kontinuierlichen Umformprozess gebildet.

Das Abdeckteil 16 ist im Wesentlichen in drei Teilbereiche unterteilt, nämlich einen mit einer Strukturierung versehenen Mittelbreich 30 sowie einen jeweils dem Seitenrand zugewandten Randbereich 32, der keine Strukturierung aufweist. Der strukturierte Mittelbereich 30 wird durch Stanzen bzw. Prägen von der Unterseite des Blechbands bzw. Abdeckteils 16 ausgebildet. Durch das Einstanzen von Vertiefungen 34 von der Unterseite wird auf der gegenüberliegenden Oberseite eine im Wesentlichen komplementäre Auswölbung 36 erzeugt, durch die in der Gesamtheit ein strukturierter Mittelbreich 30 bereitgestellt wird. Der strukturierte Mittelbereich 30 ist derart ausgebildet, dass auf der Oberseite des Abdeckteils eine rutschhemmende Oberfläche ausgebildet ist, die mindestens eine Rutschfestigkeit der Klasse R10 nach DIN 51130:2014-02 liefert. In einer bevorzugten Ausführungsform ist der strukturierte Mittelbereich, der die rutschhemmende Oberfläche bildet, in Form eines sich wiederholenden Musters, z. B. in Form einer Riffelung, bereitgestellt. Ein derartiges Muster lässt sich auf einfache Weise in einem kontinuierlichen Herstellungsverfahren einstanzen bzw. prägen. Eine beispielhafte Strukturierung ist das in den Figuren 2a, 2b, 2c, 3 und 4 gezeigte Riffelmuster mit jeweils zwei parallelen Riffelementen, die nebeneinander in einer Reihe angeordnet sind, wobei in der darauffolgenden Reihe die Riffelemente im Wesentlichen um 90° versetzt dazu angeordnet sind. Erfindungsgemäß können jedoch auch andere Strukturierungen zum Einsatz kommen, die eine ausreichend hohe Rutschfestigkeit auf der Oberseite des Kabelkanaldeckels 14 bereitstellen.

Die beiden jeweils seitlich des Mittelbereichs 30 vorgesehenen Randbereiche 32 sind ohne Strukturierung ausgebildet und stellen daher eine im Wesentlichen glatte Ober- und Unterseite bereit. Die Breite b des strukturfreien Randbereichs 32 beträgt mindestens 5 mm gemessen von der Außenseite der Seitenteile 18 bis zum nächstgelegenen Strukturelement des strukturierten Mittelbereichs 30und maximal 50 mm, insbesondere beträgt die Breite b vorzugsweise 10 mm bis 40 mm. Es ist zwar bevorzugt, dass die Breite b beider Randbereiche 32 in etwa gleich groß ist, jedoch können sich die Breiten b beiderseits des strukturierten Mittelbereichs 30 auch unterscheiden.

Durch das Vorsehen strukturfreier Randbereiche 32 wird einerseits das Herstellen der Seitenteile 18 erleichtert, in dem ein leichteres Umbiegen des Blechbandes gewährleistet ist, und andererseits können die Seitenteile 18, die vorzugsweise ebenfalls strukturfrei ausgebildet sind, durch die Verwendung herkömmlicher Haltefedern an der Kabelkanalrinne montiert werden.

Gemäß einer besonders bevorzugten Ausführungsform des erfindungsgemäßen Kabelkanaldeckels 14 sind zusätzlich zur Strukturierung im Mittelbereich 30 eingeprägte bzw. eingestanzte potenzielle Befestigungsstellen 38 vorgesehen. Diese Befestigungsstellen 38 sind vorzugsweise in einem sich wiederholenden Muster entlang der Länge ausgebildet. Der Abstand B der Befestigungsstellen 38 vom Seitenrand des Deckels 14 beträgt vorzugsweise mindestens 5 mm, starker bevorzugt 5 mm bis 70 mm und insbesondere 10 mm bis 50 mm. In Längsrichtung sind benachbarte Befestigungsstellen 38 vorzugsweise mit einem Abstand L voneinander vorgesehen, der insbesondere mindestens 25 mm beträgt und bevorzugt im Bereich von 40 mm bis 100 mm, stärker bevorzugt 50 mm bis 75 mm zu einander liegt.

Die eingeprägten Befestigungsstellen 38 sind im hergestellten Zustand des erfindungsgemäß Kabelkanaldeckels lediglich eingeprägt, so dass sich an der Innenseite eine Vertiefung 40 und an der Außenseite eine Auswölbung 42 ergibt. Mit anderen Worten sind die Befestigungsstellen 38 im hergestellten Zustand (noch) keine Öffnungen, an denen Befestigungsmittel, beispielsweise in Form von Drehriegeln 20 mit Schrauben 22 montiert werden können. Vielmehr bilden die Befestigungsstellen 38 potenzielle Befestigungsmöglichkeiten aus, die bei der Installation des erfindungsgemäßen Kabelkanaldeckels 14 individuell verwendet werden können, um Befestigungsmittel (z.B. Drehriegel 20) daran zu montieren. Hierzu ist die Stanzung bzw. Prägung für die Befestigungsstellen 38 derart ausgebildet, dass in einem Randbereich, insbesondere im Bereich des Übergangs der Vertiefung 40 zur Auswölbung 42 eine Sollbruchstelle 44 bildet. Dadurch wird gewährleistet, dass der eingestanzte Teil bzw. Butzen durch Aufbrechen der Sollbruchstelle 44 entfernt werden kann, so dass sich eine geöffnete Befestigungsstelle 46 Installationssituation immer ausreichend Befestigungsstellen 38 vorhanden sind, die zur Verriegelung des Deckels 14 an einer Kabelkanalrinne 4 verwendet werden können. Je nach Bedarf können die Befestigungsstellen 38 nämlich beispielsweise durch einfaches Ausschlagen mit einem Körner von der Innen- und/oder Außenseite geöffnet werden, um beispielsweise einen Drehriegel 20 daran zu montieren. Somit ist eine sichere Montage des Deckels 14 immer gewährleistet. Gleichzeitig kann auf die Verwendung von Spezialwerkzeugen wie Stufenbohrer, Bohren am Installationsort und so weiter verzichtet werden. Die Montage des Kabelkanaldeckels 14 gemäß der vorliegenden Erfindung ist somit deutlich erleichtet und gleichzeitig wird eine verbesserte Verriegelung gewährleistet. Die Dichtigkeit bleibt dabei in höchstem Maße gewährleistet.

Es ist bevorzugt, dass die Befestigungsstellen 38 in strukturierten Mittelbereich 30 derart angeordnet sind, dass sie in Zwischenräumen zwischen den Strukturelementen der Strukturierung, die die rutschhemmende Oberfläche bereitstellt, vorgesehen sind. In diesem Zusammenhang ist anzumerken, dass die rutschhemmende Eigenschaft des erfindungsgemäßen Kabelkanaldeckels mit einer Klasse von mindestens R10 lediglich durch die Strukturierung des Mittelbereichs erzielt wird, ohne dass die eingeprägten Befestigungsstellen 38 dabei berücksichtigt sind. Unter Berücksichtigung der weiteren Strukturierung durch die Befestigungsstellen 38 ist eine weitere Erhöhung der Rutschhemmung, insbesondere bis zur Klasse R11 oder darüber hinaus möglich.

Nachfolgend wird anhand der Figuren 5, 6 und 7 eine erfindungsgemäße Kabelkanalrinne 4, insbesondere zur Verwendung mit einem erfindungsgemäßen Kabelkanaldeckel 14, näher beschrieben. Wie bereits vorstehend im Zusammenhang mit Figuren 2a, 2b und 2c beschrieben, verfügt die Kabelkanalrinne 4 über einen Boden 6 und Seitenwände 8. Im Bereich der Seitenwände 8 sind eingestanzte bzw. eingeprägte Befestigungsstellen 10 vorgesehen. Die Befestigungsstellen 10 sind ähnlich wie die Befestigungsstellen 38 im Kabelkanaldeckel 14 im Herstellungsprozess eingestanzt bzw. eingeprägt und bilden potenzielle Befestigungsstellen aus. Damit sind auch die Befestigungsstellen 10 im hergestellten Zustand noch verschlossen, wie dies insbesondere in der Querschnittsansicht gemäß Figur 6 deutlich zu erkennen ist. Jede der Befestigungsstellen 10 verfügt über eine jeweilige Vertiefung 48, die vorzugsweise auf der Außenseite der Seitenwände 8 liegt, jedoch auch an der Innenseite vorgesehen sein kann, sowie eine im Wesentlichen komplementär dazu ausgebildete Auswölbung 50 auf der jeweiligen gegenüberliegenden Seite. Im Übergangsbereich zwischen der Vertiefung 48 und der Aufwölbung 50 ist wiederum eine Sollbruchstelle 52 vorgesehen, die zum Öffnen der Befestigungsstellen 10 aufgebrochen werden kann. Dies kann beispielsweise durch einfaches Herausschlagen des eingestanzten Teils bzw. Stanzbutzens von innen oder außen erfolgen. Dadurch lassen sich die vorgefertigten Befestigungsstellen 10 individuell und je nach Bedarf in geöffnete Befestigungsstellen 54 umwandeln, an denen in Längsrichtung benachbarte Kabelkanalrinnen miteinander verbunden werden können. Dies ist in Figur 7 näher gezeigt. Vorzugsweise kommt zur Verbindung benachbarter Kabelkanalrinnen 4 ein an der jeweiligen Seitenwand 8 angebrachtes Verbindungselement 56 zum Einsatz. Das Verbindungselement 56 verfügt vorzugsweise über mindestens zwei, bevorzugt mindestens vier, Langlöcher 58, die derart ausgebildet sind, dass sämtliche Lochabstände in Längsrichtung beabstandeter Befestigungsstellen 10 bzw. 54 verwendet werden können, um die Kabelkanalrinnen 4 miteinander zu verbinden.

Damit stellt die vorliegende Erfindung ein Kabelkanlsystem bereit, das höchst flexibel und effizient eingesetzt werden kann. Es ist zudem leicht und kostengünstig herzustellen und liefert damit erhebliche Vorteile gegenüber dem Stand der Technik bei gleichzeitig erhöhter Rutschfestigkeit.

## Patentansprüche

1. Kabelkanal (2) mit einer Kabelkanalrinne (4), einem begehbaren Kabelkanaldeckel (14) aus einem Blechband mit zwei Längsrändern und mindestens einem Befestigungsmittel zur Befestigung des Kabelkanaldeckels (14) an der Kabelkanalrinne (4), wobei der begehbare Kabelkanaldeckel (14) aufweist:
(i) ein Abdeckteil (16), das eine Oberseite und eine Unterseite hat, und
(ii) zwei vom Abdeckteil (16) abstehende Seitenteile (18), die jeweils einen Seitenrand des Kabelkanaldeckels (14) bilden und durch Umbiegen beider Längsränder von der Oberseite weg nach unten abstehend gebildet sind,
wobei die Oberseite des Abdeckteils (16) einen strukturierten Mittelbereich (30) aufweist, der durch Stanzen von der Unterseite gebildet ist und eine rutschhemmende Oberfläche bereitstellt, und
wobei die Oberseite des Abdeckteils (16) beidseitig des strukturierten Mittelbereichs (30) bis zum jeweiligen Seitenrand je einen strukturfreien Randbereich (32) mit einer Breite (b) zwischen 5 mm und 50 mm aufweist.

2. Kabelkanal nach Anspruch 1, wobei das Abdeckteil (16) und die abstehenden Seitenteile (18) eine im Wesentlichen umgekehrt U-förmige Querschnittsform definieren.

3. Kabelkanal nach Anspruch 1 oder 2, wobei die Breite (b) der strukturfreien Randbereiche (32) zwischen 10 mm und 40 mm, beträgt.

4. Kabelkanal nach einem der Ansprüche 1 bis 3, wobei der strukturierte Mittelbereich (30), der die rutschhemmende Oberfläche bereitstellt, ein sich wiederholendes Muster, insbesondere in Form einer Riffelung, aufweist.

5. Kabelkanal nach einem der Ansprüche 1 bis 4, wobei das Abdeckteil (16) eingestanzte Befestigungsstellen (38) zur Montage von Befestigungsmitteln aufweist.

6. Kabelkanal nach Anspruch 5, wobei die Befestigungsstellen (38) in einem sich wiederholenden Muster in einen Abstand (B) von mindestens 5 mm, bevorzugt 5 mm bis 70 mm und stärker bevorzugt 10 mm bis 50 mm, vom Seitenrand und mit einem Abstand (L) von mindestens 25 mm, bevorzugt 40 mm bis 100 mm, stärker bevorzugt 50 mm bis 75 mm, zueinander in Längsrichtung des Kabelkanaldeckels (14) angeordnet sind.

7. Kabelkanal nach Anspruch 5 oder 6, wobei die Befestigungsstellen (38) so angeordnet sind, dass sie in Zwischenbereichen der Strukturierung des Mittelbereichs (30) liegen.

8. Kabelkanal nach einem der Ansprüche 5 bis 7, wobei die Befestigungsstellen (38) derart eingestanzt sind, dass jeweils in ihrem Randbereich mindestens eine Sollbruchstelle (44) definiert ist, so dass ein eingestanzter Teil vom Abdeckteil (16) durch Aufbrechen der Sollbruchstelle (44), insbesondere durch Ausschlagen von der Unter- oder Oberseite des Abdeckteils (16), geöffnet werden kann.

9. Kabelkanal nach einem der Ansprüche 1 bis 8, wobei der Kabelkanaldeckel (14) einlagig aus einem Metall, insbesondere einem Aluminium- oder Stahlblech, gebildet ist.

10. Kabelkanal nach einem der Ansprüche 1 bis 9, wobei die Seitenteile (18) strukturfrei sind.

11. Kabelkanal nach einem der Ansprüche 1 bis 10, wobei das Befestigungsmittel mindestens eine Deckelhaltefeder (28) und/oder mindestens einen Drehriegel (20) zur Befestigung des Kabelkanaldeckels (14) an der Kabelkanalrinne (4) aufweist.

12. Kabelkanal (2) nach Anspruch 11, wobei die Kabelkanalrinne (4) einen Boden (6) und Seitenwände (8) aufweist, wobei in den Seitenwänden (8) eingestanzte Befestigungsstellen (10) vorgesehen sind, wobei die Befestigungsstellen (10) derart eingestanzt sind, dass jeweils in ihrem Randbereich mindestens eine Sollbruchstelle (52) definiert ist, so dass ein eingestanzter Teil der Seitenwand (8) durch Aufbrechen der Sollbruchstelle (52), insbesondere durch Ausschlagen von einer Innen- oder Außenseite der Seitenwand (8), geöffnet werden kann.

13. Verfahren zur Herstellung eines begehbaren Kabelkanaldeckels (14) mit den Schritten:
a) Bereitstellen eines Blechbandes mit einer Oberseite und einer Unterseite von einer Rolle;
b) Einstanzen eines strukturierten Mittelbereichs (30) von der Unterseite, um auf der Oberseite eine rutschhemmende Oberfläche auszubilden; und
c) kontinuierliches Umformen der beiden Längsränder des Blechbandes, um zwei Seitenteile (18) und einen dazwischen liegenden Abdeckteil (16) des Kabelkanaldeckels (14) zu bilden;
wobei die Oberseite des Abdeckteils (16) beidseitig des strukturierten Mittelbereichs (30) bis zu einem durch das jeweilige Seitenteil (18) gebildeten Seitenrand je einen strukturfreien Randbereich (32) mit einer Breite (b) zwischen 5 mm und 50 mm, bevorzugt zwischen 10 mm und 40 mm aufweist, und wobei Schritt b) im Verfahren vor Schritt c) ausgeführt wird.

14. Verfahren nach Anspruch 13, ferner mit dem Schritt des Einstanzens von Befestigungsstellen (38) im Mittelbereich (30) zur Montage von Befestigungsmitteln, insbesondere derart, dass jeweils im Randbereich der Befestigungsstellen (38) mindestens eine Sollbruchstelle (44) definiert ist, so dass ein eingestanzter Teil vom Abdeckteil (16) durch Aufbrechen der Sollbruchstelle (44), insbesondere durch Ausschlagen von der Unter- oder Oberseite des Abdeckteils (16), geöffnet werden kann.

15. Verfahren nach Anspruch 14, wobei die Befestigungsstellen (38) in einem sich wiederholenden Muster in einen Abstand (B) von mindestens 5 mm, bevorzugt 5 mm bis 70 mm und stärker bevorzugt 10 mm bis 50 mm, vom Seitenrand und mit einem Abstand (L) von mindestens 25 mm, bevorzugt 40 mm bis 100 mm, stärker bevorzugt 50 mm bis 75 mm, zueinander in Längsrichtung des Kabelkanaldeckels (14) eingestanzt werden.

## Claims

1. A cable duct (2) with a cable duct tray (4), a cable duct lid (14) that can be walked on made of a sheet metal strip with two longitudinal edges, and at least one fastener for mounting the cable duct lid (14) to the cable duct tray (4), wherein the cable duct lid (14) that can be walked on comprises:
(i) a cover member (16) having an upper surface and a lower surface, and
(ii) two lateral parts (18) protruding from the cover member (16), said lateral parts (18) each forming a lateral edge of the cable duct lid (14) and being formed by bending both longitudinal edges downwards away from the upper surface,
wherein the upper surface of the cover member (16) comprises a structured central region (30) that is formed by way of embossing from the lower surface and provides a slip-resistant surface, and
wherein the upper surface of the cover member (16) comprises a non-structured periphery (32) with a width (b) of between 5 mm and 50 mm on both sides of the structured central region (30) towards the respective lateral edge.

2. The cable duct according to claim 1, wherein the cover member (16) and the protruding lateral parts (18) define an essentially inverted U-shaped cross section.

3. The cable duct according to claim 1 or 2, wherein the width (b) of the non-structured peripheries (32) is between 10 mm and 40 mm.

4. The cable duct according to any one of claims 1 to 3, wherein the structured central region (30) that provides the slip-resistant surface comprises a repetitive pattern, in particular in the form of a ribbing.

5. The cable duct according to any one of claims 1 to 4, wherein the cover member (16) comprises embossed mounting points (38) for mounting fasteners thereon.

6. The cable duct according to claim 5, wherein the mounting points (38) are arranged in a repetitive pattern in a distance (B) of at least 5 mm, preferably 5 mm to 70 mm, and more preferably 10 mm to 50 mm to the lateral edge, and at a distance (L) of at least 25 mm, preferably between 40 mm and 100 mm, more preferably between 50 mm and 75 mm to each other in the longitudinal direction of the cable duct lid (14).

7. The cable duct according to claim 5 or 6, wherein the mounting points (38) are arranged such that they are located in intermediate regions of the structuring of the central region (30).

8. The cable duct according to any one of claims 5 to 7, wherein the mounting points (38) are embossed such that each of them defines at least one predetermined breaking point (44) in their peripheries so that an embossed part of the cover member (16) may be opened by means of breaking the predetermined breaking point (44), in particular by knocking out from the lower or upper surface of the cover member (16).

9. The cable duct according to any one of claims 1 to 8, wherein the cable duct lid (14) is formed as a single layer from a metal, particularly an aluminum or steel sheet.

10. The cable duct according to any one of claims 1 to 9, wherein the lateral parts (18) are non-structured.

11. The cable duct according to any one of claims 1 to 10, wherein the fastener comprises at least one lid retaining spring (28) and/or at least one quarter-turn lock (20) in order to mount the cable duct lid (14) to the cable duct tray (4).

12. The cable duct (2) according to claim 11, wherein the cable duct tray (4) comprises a bottom (6) and lateral walls (8), wherein embossed mounting points (10) are provided in the lateral walls (8), wherein the mounting points (10) are embossed such that each of them defines at least one predetermined breaking point (52) in its peripheries so that an embossed part of the lateral wall (8) may be opened by means of breaking the predetermined breaking point (52), in particular by knocking out from an inner or outer side of the lateral wall (8).

13. A method for producing a cable duct lid (14) that can be walked on with the steps of:
a) providing a sheet metal strip with an upper surface and a lower surface from a roll;
b) embossing a structured central region (30) from the lower surface in order to form a slip-resistant surface on the upper surface; and
c) continually deforming the two longitudinal edges of the sheet metal strip in order to form two lateral parts (18) and a cover member (16) of the cable duct lid (14) located therebetween;
wherein the upper surface of the cover member (16) comprises a non-structured periphery (32) with a width (b) of between 5 mm and 50 mm, preferably of between 10 mm and 40 mm, on each of both sides of the structured central region (30) to a lateral edge formed by the respective lateral part (18), and wherein step b) in the method is carried out prior to step c).

14. The method according to claim 13, further comprising the step of embossing mounting points (38) in the central region (30) for mounting fasteners, in particular such that at least one predetermined breaking point (44) is defined in each periphery of the mounting points (38) so that an embossed part of the cover member (16) may be opened by breaking the predetermined breaking point (44), in particular by knocking out from the lower or upper surface of the cover member (16).

15. The method according to claim 14, wherein the mounting points (38) are embossed in a repetitive pattern at a distance (B) of at least 5 mm, preferably 5 mm to 70 mm, and more preferably 10 mm to 50 mm from the lateral edge and with a distance (L) of at least 25 mm, preferably 40 mm to 100 mm, more preferably 50 mm to 75 mm to each other in the longitudinal direction of the cable duct lid (14).

## Revendications

1. Goulotte de câblage (2) avec un passage de goulotte de câblage (4), un couvercle de goulotte de câblage (14) praticable composé d'une bande de tôle avec deux bords longitudinaux et au moins un moyen de fixation pour la fixation du couvercle de goulotte de câblage (14) sur le passage de goulotte de câblage (4), dans laquelle le couvercle de goulotte de câblage (14) praticable présente :
(i) une partie de recouvrement (16), qui a une face supérieure et une face inférieure, et
(ii) deux parties latérales (18) faisant saillie de la partie de recouvrement (16), qui forment respectivement un bord latéral du couvercle de goulotte de câblage (14) et sont formées de manière à faire saillie vers le bas à l'écart de la face supérieure par repli des deux bords longitudinaux,
dans laquelle la face supérieure de la partie de recouvrement (16) présente une zone centrale structurée (30), qui est formée par estampage de la face inférieure et fournit une surface antidérapante, et
dans laquelle la face supérieure de la partie de recouvrement (16) présente des deux côtés de la zone centrale structurée (30) jusqu'au bord latéral respectif respectivement une zone de bord exempte de structure (32) avec une largeur (b) comprise entre 5 mm et 50 mm.

2. Goulotte de câblage selon la revendication 1, dans laquelle la partie de recouvrement (16) et les parties latérales (18) en saillie définissent une forme de section transversale sensiblement en forme de U inversé.

3. Goulotte de câblage selon la revendication 1 ou 2, dans laquelle la largeur (b) des zones de bord exemptes de structure (32) est comprise entre 10 mm et 40 mm.

4. Goulotte de câblage selon l'une quelconque des revendications 1 à 3, dans laquelle la zone centrale structurée (30), qui fournit la surface antidérapante, présente un motif se répétant, en particulier sous forme d'une cannelure.

5. Goulotte de câblage selon l'une quelconque des revendications 1 à 4, dans laquelle la partie de recouvrement (16) présente des points de fixation (38) estampés pour le montage de moyens de fixation.

6. Goulotte de câblage selon la revendication 5, dans laquelle les points de fixation (38) sont disposés en un motif se répétant à une distance (B) d'au moins 5 mm, de préférence 5 mm à 70 mm et plus préférentiellement 10 mm à 50 mm, du bord latéral et à une distance (L) d'au moins 25 mm, de préférence 40 mm à 100 mm, plus préférentiellement 50 mm à 75 mm, les uns des autres dans la direction longitudinale du couvercle de goulotte de câblage (14).

7. Goulotte de câblage selon la revendication 5 ou 6, dans laquelle les points de fixation (38) sont disposés de sorte qu'ils se situent dans des zones intermédiaires de la structuration de la zone centrale (30).

8. Goulotte de câblage selon l'une quelconque des revendications 5 à 7, dans laquelle les points de fixation (38) sont estampés de telle sorte qu'au moins un point de rupture (44) est défini respectivement dans leur zone de bord, de sorte qu'une partie estampée de la partie de recouvrement (16) peut être ouverte par ouverture de force du point de rupture (44), en particulier par casse de la face inférieure ou supérieure de la partie de recouvrement (16).

9. Goulotte de câblage selon l'une quelconque des revendications 1 à 8, dans laquelle le couvercle de goulotte de câblage (14) est formé d'une seule couche composée d'un métal, en particulier d'une tôle d'aluminium ou d'acier.

10. Goulotte de câblage selon l'une quelconque des revendications 1 à 9, dans laquelle les parties latérales (18) sont exemptes de structure.

11. Goulotte de câblage selon l'une quelconque des revendications 1 à 10, dans laquelle le moyen de fixation présente au moins un ressort de retenue de couvercle (28) et/ou au moins un verrou tournant (20) pour la fixation du couvercle de goulotte de câblage (14) sur le passage de goulotte de câblage (4).

12. Goulotte de câblage (2) selon la revendication 11, dans laquelle le passage de goulotte de câblage (4) présente un fond (6) et des parois latérales (8), dans laquelle des points de fixation (10) estampés dans les parois latérales (8) sont prévus, dans laquelle les points de fixation (10) sont estampés de telle sorte qu'au moins un point de rupture (52) est défini respectivement dans leur zone de bord, de sorte qu'une partie estampée de la paroi latérale (8) peut être ouverte par ouverture de force du point de rupture (52), en particulier par casse d'une face intérieure ou extérieure de la paroi latérale (8).

13. Procédé pour la fabrication d'un couvercle de goulotte de câblage (14) praticable avec les étapes :
a) de fourniture d'une bande de tôle avec une face supérieure et une face inférieure à partir d'un rouleau ;
b) d'estampage d'une zone centrale structurée (30) à partir de la face inférieure, afin de réaliser une surface antidérapante sur la face supérieure ; et
c) de façonnage continu des deux bords longitudinaux de la bande de tôle, afin de former deux parties latérales (18) et une partie de recouvrement (16) du couvercle de goulotte de câblage (14) située entre celles-ci ;
dans lequel la face supérieure de la partie de recouvrement (16) présente des deux côtés de la zone centrale structurée (30) jusqu'à un bord latéral formé par la partie latérale (18) respective respectivement une zone de bord exempte de structure (32) avec une largeur (b) comprise entre 5 mm et 50 mm, de préférence entre 10 mm et 40 mm, et dans lequel l'étape b) est exécutée dans le procédé avant l'étape c).

14. Procédé selon la revendication 13, en outre avec l'étape de l'estampage de points de fixation (38) dans la zone centrale (30) pour le montage de moyens de fixation, en particulier de telle sorte qu'au moins un point de rupture (44) est défini respectivement dans la zone de bord des points de fixation (38), de sorte qu'une partie estampée de la partie de recouvrement (16) peut être ouverte par ouverture de force du point de rupture (44), en particulier par casse de la face inférieure ou supérieure de la partie de recouvrement (16).

15. Procédé selon la revendication 14, dans lequel les points de fixation (38) sont estampés en un motif se répétant à une distance (B) d'au moins 5 mm, de préférence 5 mm à 70 mm et plus préférentiellement 10 mm à 50 mm, du bord latéral et à une distance (L) d'au moins 25 mm, de préférence 40 mm à 100 mm, plus préférentiellement 50 mm à 75 mm, les uns des autres dans la direction longitudinale du couvercle de goulotte de câblage (14).
